(19) Europäisches Patentamt
European Patent Office
Office européen des brevets

(11) EP 0 584 609 B1

(12) EUROPÄISCHE PATENTSCHRIFT

(45) Veröffentlichungstag und Bekanntmachung des Hinweises auf die Patenterteilung:
**10.03.1999 Patentblatt 1999/10**

(51) Int Cl.⁶: **C08F 4/602**, C08F 10/00, C07F 17/00

(21) Anmeldenummer: **93112580.1**

(22) Anmeldetag: **05.08.1993**

# (54) Verfahren zur Herstellung von Polyolefinen

Process for preparing polyolefins

Procédé de préparation de polyoléfines

(84) Benannte Vertragsstaaten:
**AT BE CH DE ES FR GB IT LI LU NL SE**

(30) Priorität: **15.08.1992 DE 4227049**

(43) Veröffentlichungstag der Anmeldung:
**02.03.1994 Patentblatt 1994/09**

(60) Teilanmeldung: **98116079.9 / 0 882 731**

(73) Patentinhaber: **TARGOR GmbH**
**55116 Mainz (DE)**

(72) Erfinder:
- **Winter, Andreas, Dr.**
  **D-61479 Glashütten/Taunus (DE)**
- **Antberg, Martin, Dr.**
  **D-65719 Hofheim/Taunus (DE)**
- **Bachmann, Bernd, Dr.**
  **D-65817 Eppstein/Tanus (DE)**
- **Dolle, Volker, Dr.**
  **D-64625 Bensheim (DE)**
- **Küber, Frank, Dr.**
  **D-61440 Oberursel (DE)**
- **Rohrmann, Jürgen, Dr.**
  **D-65779 Kelkheim/Taunus (DE)**
- **Spaleck, Walter, Dr.**
  **D-65835 Liederbach (DE)**

(56) Entgegenhaltungen:
**EP-A- 0 530 647** **EP-A- 0 545 303**
**EP-A- 0 545 304** **EP-A- 0 549 900**
**EP-A- 0 574 597** **EP-A- 0 576 970**

- **ANGEWANDTE CHEMIE Bd. 31, Nr. 10 , Oktober 1992 , WEINHEIM , XP319626 SPALECK W. 'High molecular weight polypropylene though specifically designed zirconocenes catalysts'**
- **JOURNAL OF ORGANOMETALLIC CHEMISTRY Bd. 417, Nr. 1-2 , 1. Oktober 1991 , LAUSANNE Seiten 9 - 27 XP328881 BURGER P. 'ansa-metallocene derivatives'**
- **J.AM.CHEM.SOC. Bd. 106 , 1984 Seiten 6355 - 6364 EWEN J. 'Mechanisms of stereochemical control in propylene polymerizations'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Zur Herstellung von hochisotaktischen Polyolefinen mit stereospezifischen racemischen Metallocen/Cokatalysator-Sytemen wird eine möglichst hohe Isotaktizität angestrebt. Dies bedeutet, daß sehr stereoselektive racemische Metallocentypen eingesetzt werden, die Polymerketten mit sehr wenig Baufehlern aufbauen können. Dies hat zur Folge, daß im gewünschten Sinne Produkte mit hoher Kristallinität, hohem Schmelzpunkt und somit auch hoher Härte und excellentem Biege-E-Modul erhalten werden.

Von Nachteil ist jedoch, daß solche Polymere schwierig zu verarbeiten sind und insbesondere bei der Extrusion, dem Spritzguß und beim Tiefziehen Probleme auftreten. Die Zumischung von Fließverbesserern und anderen Modifizierungskomponenten könnte hier Abhilfe schaffen, führt jedoch dazu, daß die guten Produkteigenschaften wie beispielsweise die hohe Härte dadurch drastisch reduziert werden. Darüberhinaus treten noch Klebrigkeit und Fogging auf. Es bestand somit die Aufgabe, die Verarbeitbarkeit solcher hochisotaktischer Polyolefine zu verbessern, ohne die guten Eigenschaften der daraus hergestellten Formkörper in solcher Weise zu verschlechtern.

EP-A-0 530 647, welches ein Stand der Technik im Sinne von Art. 54 (3,4) EPÜ ist, beschreibt spezische rac/meso Gemische oder meso Formen von Dimethylsilylbis (1-(2,4-dimethylindenyl))zirkoniumdichlorid, Dimethylsilylbis (1-(2-methyl-4-ethylindenyl))zirkoniumdichlorid, Dimethylsilylbis (1-(2-methyl-4-isopropylindenyl))zirkoniumdichlorid, Dimethylsilylbis (1-(2-methyl-4-t-butylindenyl))zirkoniumdichlorid, Methylphenylsilylbis (1-(2-methyl-4-isopropylindenyl))zirkoniumdichlorid, Dimethylsilylbis (1-(2-ethyl-4-methylindenyl))zirkoniumdimethyl. Teilweise ist auch das H-NMR Spektrum der meso-Form angegeben. Diese Verbindungen können auch zur Herstellung von Polyolefinen verwendet werden. Analoge Metallocene für die Olefinpolymerisation sind aus EP-A-0 545 303, EP-A-0 545 304, EP-A-0 549 900, EP-A-0 574 597 und EP-A-0 576 970, die ebenfalls einen Stand der Technik im Sinne von Art 54 (3,4) EPÜ darstellen, bekannt.

Überraschend haben wir gefunden, daß bei Verwendung von rac/meso-Mischungen bestimmter Metallocene die Verarbeitungsprobleme eliminiert werden können, ohne daß dabei die oben angeführten guten Produkteigenschaften verlorengehen.

Darüberhinaus ist es durch Einsatz dieser speziellen Metallocene in ihrer reinen meso-Form möglich, hochmolekulare ataktische Polyolefine zu erzeugen, die als Zuschlagstoffe in andere Polyolefine homogen eingemischt werden können.

Mit den bisher zugänglichen, niedermolekularen ataktischen Polyolefinen war dies aufgrund der großen Viskositätsunterschiede zwischen Polyolefin-Matrix und dem ataktischen Anteil nicht möglich.

Solche Zumischungen verbessern Polyolefinformkörper bezüglich ihres Oberflächenglanzes, ihrer Schlagzähigkeit und ihrer Transparenz. Darüberhinaus wird ebenfalls die Verarbeitbarkeit solcher Polyolefine durch die Zumischung des hochmolekularen ataktischen Polyolefins verbessert. Ebenfalls tritt keine Klebrigkeit und kein Fogging auf.

Die homogene Einmischbarkeit des ataktischen Anteils ist deshalb so wichtig, weil nur mit einem homogenen Material ein gebrauchstüchtiges Formteil mit guter Oberfläche und langer Standzeit hergestellt werden kann und nur bei homogener Verteilung die Qualitäten des ataktischen Anteils voll zur Geltung kommen.

Gegenstand der Erfindung ist somit die Herstellung von Polyolefinen, die

1) ataktisch sind, das heißt, einen isotaktischen Index von ≤ 60 % aufweisen und hochmolekular sind, das heißt, eine Viskositätszahl > 80 $cm^3$/g und eine Molmasse $M_w$ > 100 000 g/mol bei einer Polydispersität $M_w/M_n \leqq 4,0$ aufweisen, oder

2) aus mindestens zwei Arten von Polyolefinketten bestehen, nämlich

   a) maximal 99 Gew.-%, bevorzugt maximal 98 Gew.-%, der Polymerketten des gesamten Polyolefins bestehen aus hochisotaktisch verknüpften α-Olefin-Einheiten, mit einem Isotaxieindex > 90 %, und einer Polydispersität von ≤ 4,0, und

   b) mindestens 1 Gew.-%, bevorzugt mindestens 2 Gew.-%, der Polymerketten des gesamten Polyolefins bestehen aus ataktischen Polyolefinen des Typs, der unter 1) beschrieben wurde.

Polyolefine die der Beschreibung unter 2) genügen, können entweder direkt in der Polymerisation hergestellt werden, oder werden durch Schmelzmischen in einem Extruder oder Kneter hergestellt.

Die Erfindung betrifft somit ein Verfahren zur Herstellung eines Olefinpolymers wie vorstehund definiert durch Polymerisation oder Copolymerisation eines Olefins der Formel $R^a$-CH =CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I ist, die zur Herstellung von Polyolefinen des Typs 1 in reiner meso-Form und zur Herstellung der Typ 2-Polyolefine in einem meso:rac-Verhältnis von größer 1:99, bevorzugt größer 2:98 verwendet wird,

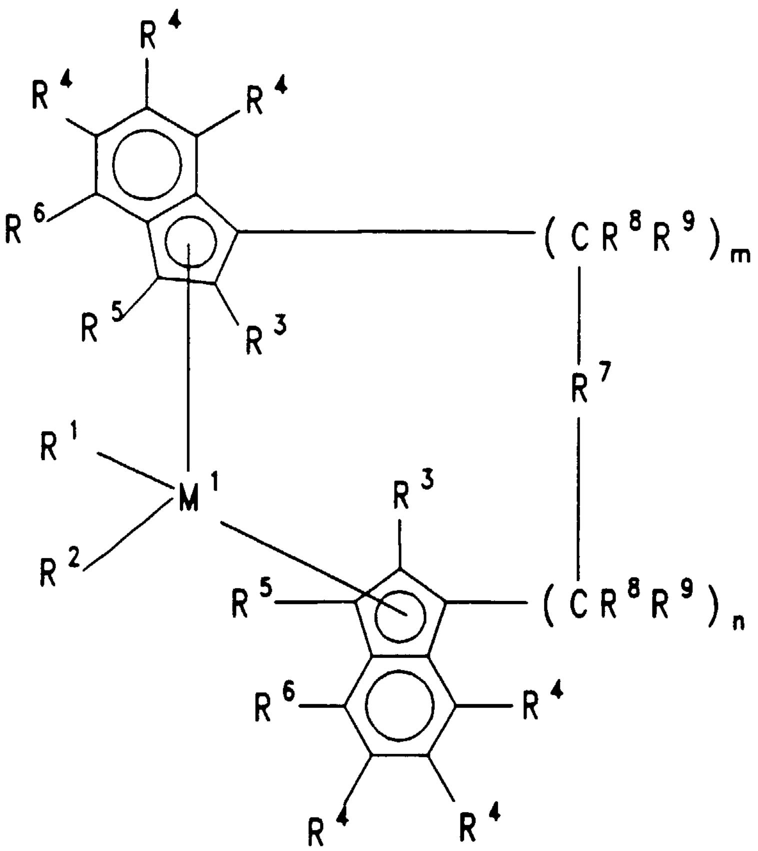

(I)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| die Reste $R^4$ und $R^5$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, die halogeniert sein kann, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^3$ und $R^6$ | gleich oder verschieden sind und die für $R^4$ genannte Bedeutung haben, mit der Maßgabe, daß $R^3$ und $R^6$ nicht Wasserstoff sind, |

oder zwei oder mehr der Reste $R^3$ bis $R^6$ zusammen mit den sie verbindenden Atomen ein Ringsystem bilden,
$R^7$

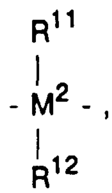
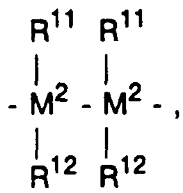
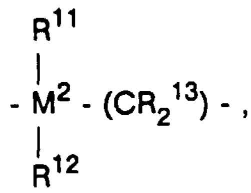
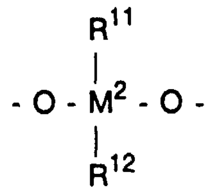

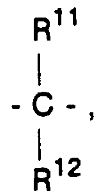
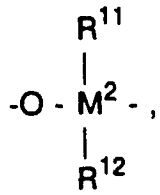

$=BR^{11}$, $-AlR^{11}$, -Ge-, -Sn-, -O-,-S-, =SO, $=SO_2$, $=NR^{11}$, =CO, $=PR^{11}$ oder $=P(O)R^{11}$ ist,
wobei

| | |
|---|---|
| $R^{11}$, $R^{12}$ und $R^{13}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silizium, Germanium oder Zinn ist, |
| $R^8$ und $R^9$ | gleich oder verschieden sind und die für $R^{11}$ genannte Bedeutung haben und |
| m und n | gleich oder verschieden sind und null, 1 oder 2 sind, wobei m plus n null, 1 oder 2 ist. |

Alkyl steht für geradkettiges oder verzweigtes Alkyl. Halogen (halogeniert) bedeutet Fluor, Chlor, Brom oder Jod, bevorzugt Fluor oder Chlor.

Die Substituenten $R^3$, $R^4$, $R^5$ und $R^6$ können trotz gleicher Indizierung verschieden sein.

Der für das erfindungsgemäße Verfahren zu verwendende Katalysator besteht aus einem Cokatalysator und einem Metallocen der Formel I.

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

Die Reste $R^4$ und $R^5$ sind gleich oder verschieden und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_9$-Arylgruppe, die halogeniert sein kann, einen $-NR_2^{10}$, $-SR^{10}$, $-OSiR_3^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist. Besonders bevorzugt sind $R^4$ und $R^5$ Wasserstoff, $C_1$-$C_4$-Alkyl oder $C_6$-$C_9$-Aryl.

$R^3$ und $R^6$ sind gleich oder verschieden und haben die für $R^4$ beschriebene Bedeutung, mit der Maßgabe, daß $R^3$ und $R^6$ nicht Wasserstoff sein dürfen. Bevorzugt sind $R^3$ und $R^6$ ($C_1$-$C_4$)-Alkyl oder $C_6$-$C_9$-Aryl, die beide halogeniert sein können, wie Methyl, Ethyl, Propyl, Isopropyl, Butyl, Isobutyl, Trifluormethyl, Phenyl, Tolyl oder Mesityl, insbesondere Methyl, Isopropyl oder Phenyl.

Zwei oder mehr der Reste $R^3$ bis $R^6$ können auch mit den sie verbindenden Atomen ein aromatisches oder aliphatisches Ringsystem bilden. Bevorzugt bilden dabei benachbarte Reste, insbesondere $R^4$ und $R^6$ zusammen einen Ring.

$R^7$

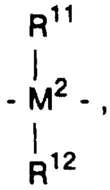 , 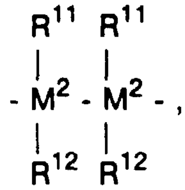 , 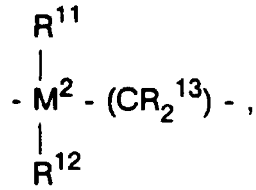 , 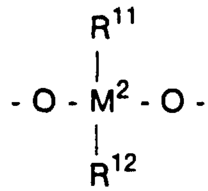

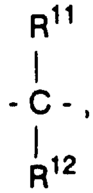 , 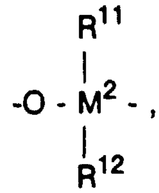 ,

$=BR^{11}$, $=AlR^{11}$, -Ge-, -Sn-, -O-,-S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene die Verbindungen der Formeln A und B

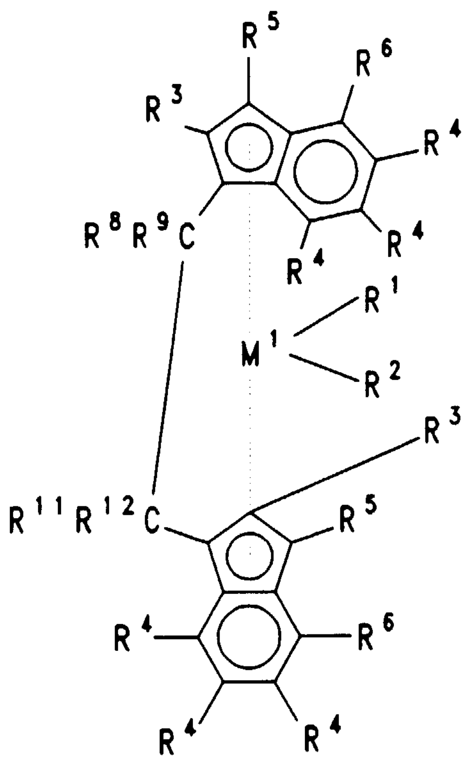

(A)

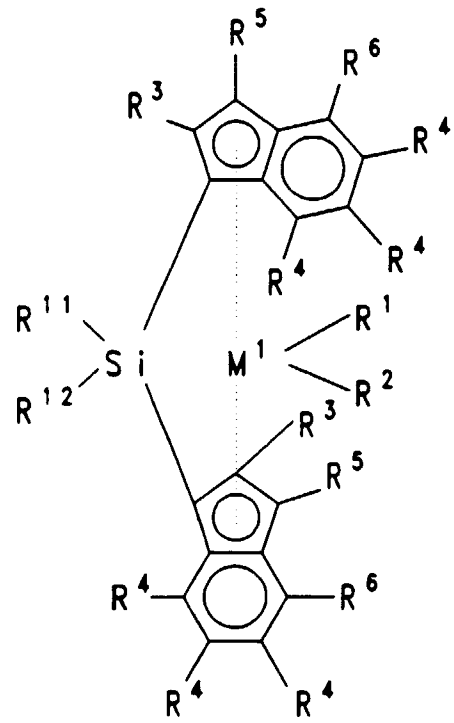

(B)

mit $M^1$ = Zr, Hf; $R^1$, $R^2$ = Methyl, Chlor, $R^3$ und $R^6$ = Methyl, Isopropyl, Phenyl, Ethyl, Trifluormethyl; $R^4$ und $R^5$ = Wasserstoff und den für $R^3$ und $R^6$ genannten Bedeutungen, oder $R^4$ kann mit $R^6$ einen aliphatischen oder aromatischen Ring bilden, gleiches gilt auch für benachbarte Reste $R^4$; und $R^8$, $R^9$, $R^{11}$ und $R^{12}$ mit den obengenannten Bedeutungen, insbesondere die in den Ausführungsbeispielen aufgeführten Verbindungen I.

Das bedeutet, daß die Indenylreste der Verbindungen I insbesondere in 2,4-Stellung, in 2,4,6-Stellung, in 2,4,5-Stellung und in 2,4,5,6-Stellung substituiert sind, die Reste in 3- und 7-Stellung sind bevorzugt Wasserstoff.

Nomenklatur:

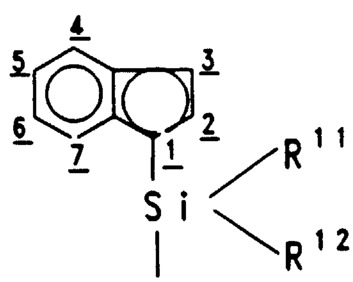

Die vorstehend beschriebenen Metallocene können nach folgendem literaturbekannten Reaktionsschema hergestellt werden:

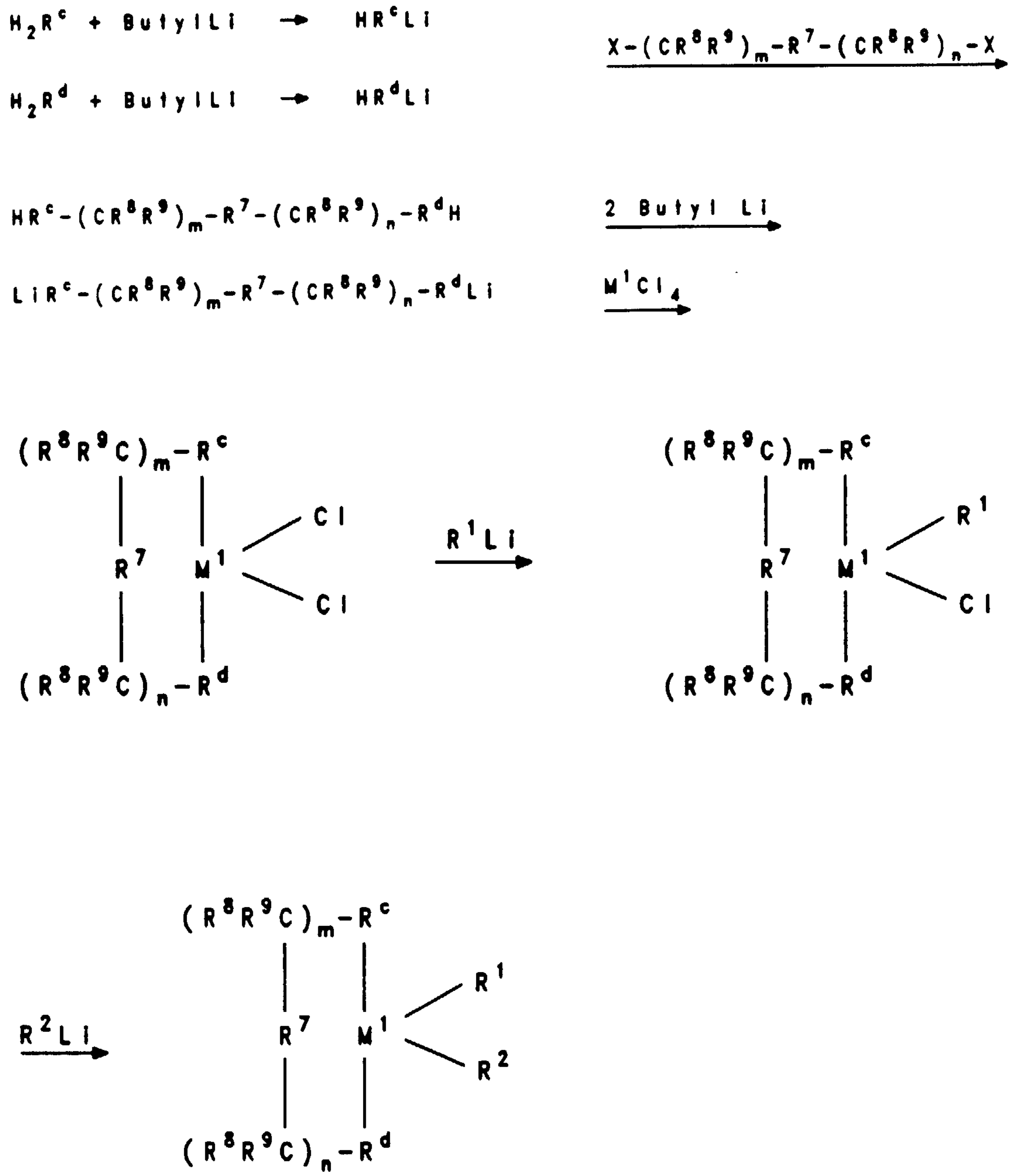


X = Cl, Br, I, O-Tosyl; $H_2R^c$, $H_2R^d$ =

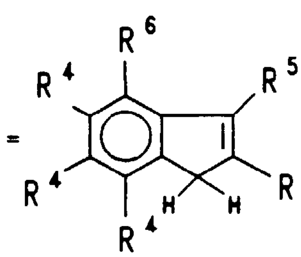

Die Verbindungen fallen ex Synthese als rac:meso-Mischungen an. Durch fraktionierte Kristallisation, beispielsweise in einen Kohlenwasserstoff, kann die meso bzw. rac-Form angereichert werden. Dieses Vorgehen ist bekannt und Stand der Technik.

Erfindungsgemäß wird als Cokatalysator bevorzugt ein Aluminoxan der Formel (II)

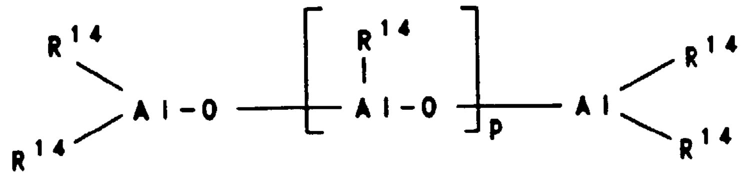

(II)

für den linearen Typ und/oder der Formel (III)

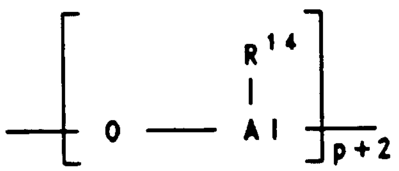

(III)

für den cyclischen Typ verwendet, wobei in den Formeln (II) und (III) die Reste $R^{14}$ gleich oder verschieden sein können und eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeutet.

Bevorzugt sind die Reste $R^{14}$ gleich und bedeuten Methyl, Isobutyl, Phenyl oder Benzyl, besonders bevorzugt Methyl.

Sind die Reste $R^{14}$ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste $R^{14}$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit veschiedenen Alkylgruppen $R^{14}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$- 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Erfindungsgemäß können an Stelle oder neben eines Aluminoxans Verbindungen der Formeln $R_xNH_{4-x}BR'_4$, $R_xPH_{4-x}BR'_4$, $R_3CBR'_4$ oder $BR'_3$ als geeignete Cokatalysatoren verwendet werden. In diesen Formeln bedeutet x eine Zahl von 1 bis 4, bevorzugt 3, die Reste R sind gleich oder verschieden, bevorzugt gleich, und bedeuten $C_1$-$C_{10}$-Alkyl, $C_6$-$C_{18}$-Aryl oder 2 Reste R bilden zusammen mit dem sie verbindenden Atom einen Ring, und die Reste R' sind gleich oder verschieden, bevorzugt gleich, und stehen für $C_6$-$C_{18}$-Aryl, das durch Alkyl, Haloalkyl oder Fluor substituiert sein

kann.

Insbesondere steht R für Ethyl, Propyl, Butyl oder Phenyl und R' für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator bzw. das aus ihm gebildete Anion keine weiteren Reaktionen mit dem gebildeten Metallocenkation eingehen (vgl. EP-A 427 697).

Zur Entfernung von im Olefin vorhandener Katalystorgifte ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 30 bis 80°C, besonders bevorzugt 50 bis 80°C, durchgeführt. Polymerisiert oder copolymerisiert werden Olefine der Formel $R^a$-CH=CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbonadien. Insbesondere werden Propylen und Ethylen polymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$mol, vorzugsweise $10^{-4}$ bis $10^{-2}$ mol pro $dm^3$ Lösemittel bzw. pro $dm^3$ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler- Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen meso-Metallocene im technisch besonders interessanten Temperaturbereich zwischen 50 und 80°C ataktische Polymere mit hoher Molmasse erzeugen. rac/meso-Mischungen der erfindungsgemäßen Metallocene erzeugen besonders gut vearbeitbare homogene Polymere. Daraus hergestellte Formkörper zeichnen sich durch gute Oberflächen und hohe Transparenz aus. Daneben sind hohe Oberflächenhärte und gute Biege-E-Module Charakteristika solcher Formteile.

Der hochmolekulare ataktische Anteil weist keine Klebrigkeit auf und die Formkörper zeichnen sich ferner durch sehr gutes Fogging-Verhalten aus.

Die nachfolgenden Beispiele sollen die Erfindung näher erläutern.

Es bedeuten:

VZ = Viskositätszahl in $cm^3/g$

$M_w$ = Molmassengewichtsmittel in g/mol

$M_w/M_n$ = Polydispersität

($M_w$ und $M_w/M_n$) ermittelt durch Gelpermeations-chromatographie

Schmp. = Schmelzpunkt ermittelt mit DSC (20°C/min Aufheiz-/Abkühlgeschwindigkeit)
II = Isotaktischer Index (II = mm+1/2mr) ermittelt durch $^{13}C$-NMR-Spektroskopie
$n_{iso}$ = Isotaktische Blocklänge ($n_{iso} = 1 + \frac{2\,mm}{mr}$)
$n_{syn}$ = Syndiotaktische Blocklänge ($n_{syn} = 1 + \frac{2\,rr}{mr}$)

MFI/(230/5) Schmelzindex, gemessen nach DIN 53735; in dg/min.

Beispiele 1 bis 16

Ein trockener 24 $dm^3$-Reaktor wurde mit Propylen gespült und mit 12 $dm^3$ flüssigem Propylen befüllt. Dann wurden 35 $cm^3$ toluolische Methylaluminoxanlösung (entsprechend 52 mmol Al, mittlerer Oligomerisierungsgrad p = 18) zugegeben und der Ansatz bei 30°C 15 Minuten gerührt. Parallel dazu wurden 7,5 mg des in Tabelle 1 aufgeführten meso-Metallocens in 13,5 $cm^3$ toluolischer Methylaluminoxanlösung (30 mmol Al) gelöst und durch 15 minütiges Stehenlassen voraktiviert.
Die Lösung wurde dann in den Reaktor gegeben und auf 70°C bzw. 50°C (Tabelle 1) aufgeheizt (10°C/min). Die Polymerisationsdauer war 1 h. Gestoppt wurde die Polymerisation durch Zugabe von 20 $Ndm^3$ $CO_2$-Gas. Die Metallocenaktivitäten und die Viskositätszahlen der dabei erhaltenen ataktischen Polymere sind in Tabelle 1 zusammengestellt. Die $^{13}C$-NMR-Analysen ergaben in allen Fällen isotaktische Blocklängen $n_{iso} < 4$, typisch war $n_{iso} = 2$, die syndiotaktische Blocklänge lag typisch ebenfalls im Bereich von 2. Die Triadenverteilungen mm : mr : rr waren typisch etwa 25 : 50 : 25 und der Isotaxieindex (mm + ½ mr) lag unter 60 %. Es handelte sich also zweifelsfrei um typische ataktische Polypropylene.
Dies belegt auch die Löslichkeit in siedendem Heptan beziehungsweise in Diethylether.
Im DSC-Spektrum war kein definierter Schmelzpunkt erkennbar. Tg-Übergänge waren im Bereich 0°C bis -20°C zu beobachten.

Tabelle 1

| meso-Metallocen | Polymerisations-temperatur [°C] | Aktivität [kg PP/g Metallocen x h] | VZ [$cm^3/g$] | Bsp. |
|---|---|---|---|---|
| $Me_2Si(2,4\text{-dimethyl-1-indenyl})_2ZrCl_2$ | 50 | 35,7 | 125 | 1 |
| $Me_2Si(2\text{-methyl-4-isopropyl-1-indenyl})_2ZrCl_2$ | 70 | 60,4 | 93 | 2 |
| $Me_2Si(2\text{-ethyl-4-methyl-1-indenyl})_2ZrCl_2$ | 70 | 70,3 | 101 | 3 |
| $Ph(Me)Si(2\text{-methyl-4-isopropyl-1-indenyl})_2ZrCl_2$ | 50 | 20,6 | 120 | 4 |
| $Me_2Si(2\text{-methyl-4,5-benzoindenyl})_2ZrCl_2$ | 70 | 200,0 | 120 | 5 |
| $Me_2Si(2\text{-methyl-4,5-benzoindenyl})_2ZrCl_2$ | 50 | 60,4 | 150 | 6 |
| $Me_2Si(2,4,6\text{-trimethyl-1-indenyl})_2ZrCl_2$ | 50 | 30,1 | 163 | 7 |
| $Me_2Si(2\text{-methyl-4,6-diisopropyl-1-indenyl})_2ZrCl_2$ | 50 | 24,5 | 89 | 8 |
| $Me_2Si(2\text{-methyl-}\alpha\text{-acenaphthindenyl})_2ZrCl_2$ | 50 | 49,3 | 224 | 9 |
| $Me_2Si(2\text{-methyl-}\alpha\text{-acenaphthindenyl})_2ZrCl_2$ | 70 | 189,4 | 140 | 10 |
| $Me_2Si(2\text{-methyl-4-phenyl-1-indenyl})_2ZrCl_2$ | 70 | 64,5 | 131 | 11 |

| meso-Metallocen | Polymerisations-temperatur [°C] | Aktivität [kg PP/g Metallocen x h] | VZ [$cm^3/g$] | Bsp. |
|---|---|---|---|---|
| $Me_2Si$(2-methyl-4-phenyl-1-indenyl)$_2ZrCl_2$ | 50 | 32,5 | 169 | 12 |
| Ethylen(2,4,6-trimethyl-1-indenyl)$_2ZrCl_2$ | 70 | 145,5 | 124 | 13 |
| Ethylen(2-methyl-4,5-benzoindenyl)$_2ZrCl_2$ | 50 | 94,9 | 109 | 14 |
| Methylethylen(2-methyl-$\alpha$-acenaphthindenyl)$_2ZrCl_2$ | 50 | 64,3 | 204 | 15 |
| Ph(Me)Si(2-methyl-$\alpha$-acenaphthindenyl)$_2ZrCl_2$ | 50 | 69,8 | 198 | 16 |

Beispiele 17 bis 23

Die Beispiele 1, 4, 7, 9, 12, 15 und 16 wurden wiederholt, statt des reinen meso-Metallocens wurde jedoch eine rac:meso = 1:1-Mischung eingesetzt.

Die erhaltenen Polymere wurden mit siedendem Ether extrahiert oder in einem Kohlenwasserstoff mit dem Siedebereich 140/170°C aufgelöst und fraktioniert kristallisiert. Dabei wurde der hochmolekulare ataktische Anteil abgetrennt und war so unabhängig vom isotaktischen Rückstand analysierbar. Die Ergebnisse sind in Tabelle 2 zusammengefaßt. Die Produkte sind nicht klebrig, daraus hergestellte Formkörper zeigen kein Fogging und weisen eine excellente Oberfläche und Transparenz auf.

Tabelle 2

| Bsp. | rac:meso = 1:1-Metallocenmischung | Aktivität [kg PP/g Metallocen x h] | Etherlöslicher ataktischer Anteil | | Etherunlöslicher isotaktischer Anteil | |
|---|---|---|---|---|---|---|
| | | | Gew.-% | VZ [$cm^3/g$] | Gew.-% | VZ [$cm^3/g$] |
| 17 | $Me_2Si$(2,4-dimethyl-1-indenyl)$_2ZrCl_2$ | 69,5 | 25,4 | 117 | 74,6 | 216 |
| 18 | Ph(Me)Si(2-methyl-4-isopropyl-1-indenyl)$_2ZrCl_2$ | 102,3 | 12,0 | 124 | 88,0 | 280 |
| 19 | $Me_2Si$(2,4,6-trimethyl-1-indenyl)$_2ZrCl_2$ | 114,0 | 18,5 | 152 | 71,5 | 245 |
| 20 | $Me_2Si$(2-methyl-$\alpha$-acenaphthindenyl)$_2ZrCl_2$ | 61,4 | 44,9 | 209 | 53,1 | 438 |
| 21 | $Me_2Si$(2-methyl-4-phenyl-1-indenyl)$_2ZrCl_2$ (5 mg) | 334,5 | 5,5 | 177 | 94,5 | 887 |
| 22 | Methylethylen(2-methyl-$\alpha$-acenaphthindenyl)$_2ZrCl_2$ | 85,2 | 36,9 | 199 | 63,1 | 365 |
| 23 | Ph(Me)Si(2-methyl-$\alpha$-acenaphthindenyl)$_2ZrCl_2$ | 79,1 | 31,2 | 205 | 68,8 | 465 |

Beispiele 24 bis 28

Beispiel 5 wurde wiederholt, es wurden jedoch statt der reinen meso-Form des Metallocens rac:meso-Verhältnisse von 98:2, 95:5, 90:10, 85:15 und 75:25 verwendet. Die Ergebnisse sind in Tabelle 3 zusammengefaßt. Es wird ein nichtklebriges Pulver erhalten, daraus hergestellte Formkörper weisen eine gute Oberfläche auf, sind nicht klebrig und zeigen kein Fogging. Die Härte der Formkörper ist gut, ebenfalls die Transparenz.

Tabelle 4

| Bsp. | rac:meso | Aktivität [kg PP/g Metallocen x h] | Etherlöslicher ataktischer Anteil | | Etherunlöslicher isotaktischer Anteil | |
|---|---|---|---|---|---|---|
| | | | Gew.-% | VZ [$cm^3$/g] | Gew.-% | VZ [$cm^3$g] |
| 24 | 98 : 2 | 436 | 0,95 | 134 | 99,05 | 285 |
| 25 | 95 : 5 | 410 | 2,7 | 119 | 97,3 | 276 |
| 26 | 90 : 10 | 415 | 4,3 | 122 | 95,7 | 296 |
| 27 | 85 : 15 | 370 | 7,3 | 125 | 92,7 | 300 |
| 28 | 75 : 25 | 347 | 15,2 | 130 | 84,8 | 280 |

Beispiel 29

Beispiel 24 wurde mit 12 $Ndm^3$ Wasserstoff im Polymerisationssystem wiederholt. Die Polymerisationsdauer war 30 Minuten. Die Metallocenaktivität war 586 kg PP/g Metallocen x h. Der etherlösliche Anteil betrug 1,1 Gew.-% bei einer VZ von 107 $cm^3$/g, der etherunlösliche Anteil war 98,9 Gew.-% mit einer VZ von 151 $cm^3$/g.

Beispiel 30

Beispiel 25 wurde wiederholt, während der Polymerisation wurden jedoch 70 g Ethylen kontinuierlich zudosiert. Die Polymerisationsdauer war 45 Minuten. Die Metallocenaktivität betrug 468 kg PP/g Metallocen x h, der Ethylengehalt des Copolymers betrug 3,3 Gew.-%, der Einbau des Ethylens erfolgte laut $^{13}C$-NMR-Spektroskopie weitgehend isoliert (statistisches Copolymer).

Beispiel 31

Ein trockener 150 $dm^3$-Reaktor wurde mit Stickstoff gespült und bei 20°C mit 80 $dm^3$ eines entaromatisierten Benzinschnittes mit dem Siedebereich 100 bis 120°C gefüllt. Dann wurde der Gasraum mit Propylen stickstofffrei gespült und 50 l flüssiges Propylen sowie 64 $cm^3$ toluolische Methylaluminoxanlösung (100 mmol Al, p = 18) zugegeben.
Der Reaktorinhalt wurde auf 60°C aufgeheizt und durch Zudosierung von Wasserstoff wurde der Wasserstoffgehalt im Reaktorgasraum auf 0,1 % eingestellt und später während der Polymerisation dann durch Nachdosierung während der gesamten Polymerisationszeit konstant gehalten (Überprüfung on-Line durch Gaschromatographie).
10,7 mg rac:meso (95:5) des Metallocens Dimethylsilandiylbis(2-methyl-4,5-benzoindenyl)-zirkondichlorid wurden in 32 $cm^3$ toluolischer Methylaluminoxanlösung (50 mmol) gelöst und in den Reaktor gegeben.
Die Polymerisation erfolgte in einer ersten Stufe bei 60°C 8 h lang.
In einer zweiten Stufe wurden dann bei 47°C 2,8 kg Ethylen schnell zugegeben und nach weiteren 5 h Polymerisation bei dieser Temperatur wurde die Polymerisation durch Ablassen des Reaktorinhalts in einem 280 l-Reaktor, der mit 100 l Aceton gefüllt war, beendet. Das Polymerpulver wurde abgetrennt und 48 h bei 80°C/200 mbar getrocknet. Es wurden 21,4 kg Blockcopolymerpulver erhalten. VZ = 359 $cm^3$/g; $M_w$ = 402 000 g/mol, $M_w/M_n$ = 4,0; MFI (230/5) = 9,3 dg/min. Das Blockcopolymer enthielt 12,2 Gew.-% Ethylen. Die Fraktionierung ergab einen Gehalt von 31,5 Gew.-% Ethylen/Propylen-Kautschuk und 3,7 Gew.-% ataktisches Polypropylen mit einer VZ von 117 $cm^3$/g im Gesamtpolymer.

Beispiel 32

Es wurde verfahren wie in den Beispielen 1-16, das Metallocen war jedoch die Verbindung meso-$Me_2Si$(2-methyl-4-(1-naphthyl)-1-indenyl)$_2ZrCl_2$. Die Ergebnisse sind in Tabelle 4 zusammengestellt.

Tabelle 4

| Polymerisations-temperatur[°C] | Aktivität [kgPP/g Metallocen xh] | VZ [$cm^3$/g] | $M_w/M_n$ | $M_w$ [g/mol] |
|---|---|---|---|---|
| 70 | 58.3 | 205 | 2.0 | 249 500 |
| 50 | 31.7 | 335 | 2.1 | 425 500 |

Beispiel 33

Es wurde verfahren wie in Beispiel 32, das Metallocen war jedoch Ph(Me)Si(2-methyl-4-phenyl-1-indenyl)$_2$ZrCl$_2$ und wurde als 1:1 meso:rac-Mischung eingesetzt. Die Ergebnisse sind in Tabelle 5 zusammengestellt.

Tabelle 5

| Polymerisations-temperatur[°C] | Aktivität [kgPP/g Metallocen xh] | VZ [$cm^3$/g] | $M_w/M_n$ | $M_w$ [g/mol] |
|---|---|---|---|---|
| 70 | 112.5 | 559 | 3.5 | 738 000 |
| 50 | 51.0 | 1084 | 3.6 | $1.35 \cdot 10^6$ |

Die Fraktionierung der Polymerproben mittels Etherextraktion ergaben Gehalte an ataktischen Polypropylen von 3,6 Gew.-% (50°C Polymerisationstemperatur) beziehungsweise 7,0 Gew.-% (70°C Polymerisationstemperatur). Die VZ-Werte betrugen 158 beziehungsweise 106 $cm^3$/g.

Der isolierte ataktische Anteil war von gummielastischer Konsistenz und völlig transparent.
Das aus der Polymerisation anfallende Polymerpulver ist nicht klebrig, daraus hergestellte Formkörper weisen eine gute Oberfläche auf, sind sehr transparent und zeigen kein Fogging.

Beispiel 34

Es wurde verfahren wie in Beispiel 32, als Metallocen wurde jedoch rac/meso-Me$_2$Si(2-methyl-4-phenyl-1-indenyl)$_2$ZrCl$_2$ in geträgerter Form verwendet, das rac : meso-Verhältnis war 1 : 1. Das geträgerte Metallocen wurde in folgender Weise hergestellt:

a) Herstellung des geträgerten Cokatalysators

Herstellung des geträgerten Cokatalysators erfolgte wie in EP 92 107 331.8 beschrieben in der folgenden Weise in einem Edelstahl-Reaktor in explosionsgeschützter Ausführungen mit einem Umpumpsystem der Druckstufe 60 bar, mit Inertgasversorgung, Temperierung durch Mantelkühlung und zweitem Kühlkreislauf über einem Wärmetauscher am Umpumpsystem. Das Umpumpsystem saugte den Reaktorinhalt über einen Anschluß im Reaktorboden mit einer Pumpe an drückte ihn in einen Mischer und durch eine Steigleitung über einen Wärmetauscher in den Reaktor zurück. Der Mischer war so geschaltet, daß sich in dem Zulauf ein verengter Rohrquerschnitt befand, wo eine erhöhte Strömungsgeschwindigkeit entstand, und in dessen Turbulenzzone axial und entgegen der Strömungsrichtung eine dünne Zuleitung geführt war, durch welche - getaktet- jeweils eine definierte Menge Wasser unter 40 bar Argon eingespeist werden konnte. Die Kontrolle der Reaktion erfolgte über einen Probennehmer am Umpumpkreislauf.

Im vorstehend beschriebenen Reaktor mit 16 $dm^3$ Volumen wurden 5 $dm^3$ Decan unter Inertbedingungen vorgelegt. 0,3 $dm^3$ (= 3,1 mol) Trimethylaluminium wurden bei 25°C zugefügt. Danach wurden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 45.9 g Wasser wurde in Portionen von 0,1 $cm^3$ während 2 h jeweils alle 15 s in den Reaktor gegeben. Der Druck, herrührend von Argon und den entwickelten Gasen, wurde durch Druckregelventile konstant bei 10 bar gehalten. Nachdem alles Wasser eingebracht worden war, wurde das Umpumpsystem abgeschaltet und das Rühren noch 5 h bei 25°C fortgesetzt. Über eine Drucknutsche wurde das Lösungsmittel entfernt und der Cokatalysatorfeststoff mit Decan gewaschen. Dann wurde im Vakuum getrocknet. Der isolierte Feststoff enthält 19,5 Gew.-% Aluminium. 15 g dieses Feststoffes (108 mmol Al) wurden in einem rührbaren Gefäß in 100 $cm^3$ Toluol suspendiert und auf -30°C abgekühlt. Gleichzeitig wurden 200 mg (0,317 mmol) rac/meso 1 : 1 Me$_2$Si(2-methyl-4-phenyl-indenyl)$_2$ZrCl$_2$ in 75 $cm^3$ Toluol gelöst und innerhalb von 30 Minuten zur Suspension zugetropft. Es wurde langsam unter Rühren auf Raumtemperatur erwärmt, wobei die Suspension eine rote Farbe annahm. Anschließend wurde eine Stunde bei 70°C gerührt und nach dem Abkühlen auf Raumtemperatur wurde das Gemisch filtriert und der Feststoff 3 mal mit je 100 $cm^3$ Toluol und 1 mal mit 100 $cm^3$ Hexan gewaschen. Der verbleibende, hexanfeuchte Filterrückstand wurde im Vakuum getrocknet. Man erhält 14,1 g frei fließenden, hellroten, geträgerten Katalysator. Die Analyse ergab einen Gehalt von 11,9 mg Zirkonocen pro Gramm Katalysator.

b) Polymerisation

0,7 g des unter a) hergestellten Katalysators wurden in 50 $cm^3$ eines entaromatisierten Benzinschnittes mit dem Siedebereich 100 - 120°C suspendiert.

Parallel dazu wurde ein trockener 24 $dm^3$-Reaktor zunächst mit Stickstoff und anschließend mit Propylen gespült und mit 12 $dm^3$ flüssigem Propylen und mit 1,5 $dm^3$ Wasserstoff befüllt. Dann wurden 3 $cm^3$ Triisobutylaluminium (12 mmol) mit 30 ml Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 70°C aufgeheizt (10°C/min) und das Polymerisationssystem 1 h durch Kühlung bei 70°C gehalten. Gestoppt wurde die Polymerisation durch Zusatz von 20 ml Isopropanol. Das überschüssige Monomer wurde abgegast, das Polymer im Vakuum getrocknet.

Es resultierten 1,57 kg Polypropylen-Pulver.

Die Fraktionierung des Polymers mittels Etherextraktion ergab einen Etherlöslichen ataktischen Anteil von 8,9 Gew.-% (VZ = 149 $cm^3$/g) und einen unlöslichen isotaktischen Anteil von 91,1 Gew.-% mit einer VZ von 489 $cm^3$/g. Das so hergestellte Pulver ist nicht klebrig, daraus hergestellte Formkörper zeigen im Wärmealterungstest kein Fogging, Härte und Transparenz der Formkörper sind sehr gut.

Vergleichsbeispiele 1 bis 10

In zu den vorstehenden Beispielen vergleichbarer Weise wurden Polymerisationen mit 1:1 rac:meso-Mischungen von nicht erfindungsgemäßen Metallocenen bei 70°C und 30°C Polymerisationstemperatur durchgeführt. Die erhaltenen Polymeren wurden ebenfalls einer Ethertrennung zur Charakterisierung der Polymerkomponenten unterworfen. Die Ergebnisse sind in Tabelle 6 zusammengestellt und zeigen, daß in keinem Fall ein erfindungsgemäßes Polymer mit hochmolekularem ataktischem Polymeranteil (etherlöslicher Anteil) hergestellt werden konnte. Die Produkte sind generell klebrig, die daraus hergestellten Formkörper sind weich, weisen eine fleckige Oberfläche auf und zeigen starkes Fogging.

Tabelle 6

| Metallocen | Polymerdaten | | | |
|---|---|---|---|---|
| rac:meso = 1:1 Mischung | 70°C Polymerisationstemperatur | | 30°C Polymerisationstemperatur | |
| | VZ etherlöslich [$cm^3/g$] | VZ etherunlöslich [$cm^3/g$] | VZ etherlöslich [$cm^3/g$] | VZ etherunlöslich [$cm^3/g$] |
| $Me_2Si(indenyl)_2ZrCl_2$ | 45 | 42 | 46 | 75 |
| $Me_2Si(2\text{-}methyl\text{-}1\text{-}indenyl)_2ZrCl_2$ | 50 | 180 | 56 | 340 |
| $Methylethylen(2\text{-}methyl\text{-}1\text{-}indenyl)_2ZrCl_2$ | 56 | 127 | 59 | 409 |
| $Ph(Me)Si(2\text{-}methyl\text{-}1\text{-}indenyl)_2ZrCl_2$ | 50 | 202 | 57 | 501 |
| $Me_2Si(2\text{-}ethyl\text{-}1\text{-}indenyl)_2ZrCl_2$ | 59 | 187 | 61 | 443 |
| $Me_2Si(2,4,5\text{-}trimethyl\text{-}1\text{-}cyclopentadienyl)_2ZrCl_2$ | 45 | 50 | 47 | 236 |
| $Me_2Si(2,4,5\text{-}trimethyl\text{-}1\text{-}cyclopentadienyl)_2HfCl_2$ | 59 | 175 | 69 | 356 |
| $Me_2Si(indenyl)_2HfCl_2$ | 61 | 237 | 63 | 398 |
| $Ethylen(2\text{-}methyl\text{-}1\text{-}indenyl)_2ZrCl_2$ | 47 | 85 | 50 | 135 |
| $Me_2Si(2\text{-}methyl\text{-}4\text{-}t\text{-}butyl\text{-}1\text{-}cyclopentadienyl)_2ZrCl_2$ | 28 | 31 | 35 | 105 |

Vergleichsbeispiele 11 bis 21

Vergleichsbeispiele 1 bis 10 wurden mit den reinen meso-Formen der dort verwendeten Metallocene wiederholt. Es wurde ataktisches Polypropylen erhalten, jedoch in keinem Fall wurde eine Viskositätszahl VZ > 70 $cm^3/g$ erhalten. Mit diesen nicht erfindungsgemäßen Metallocenen ist somit kein hochmolekulares ataktisches Polypropylen herstellbar. Die Produkte sind flüssig oder zumindest weich und stark klebrig.

## Patentansprüche

1. Verfahren zur Herstellung eines Olefinpolymers mit einer Viskositätszahl VZ > 80 $cm^3/g$, einer Molmasse $M_w$ > 100 000g/mol, einer Polydispersität $M_w/M_n \leq 4{,}0$ und einem isotaktischen Index ≤ 60 % durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen in der meso-Form oder einer meso:rac-Mischung, mit meso:rac > 1:99, als Übergangsmetallverbindung und einem Cokatalysator gebildet wird, dadurch gekennzeichnet, daß das Metallocen eine Verbindung der Formel ist

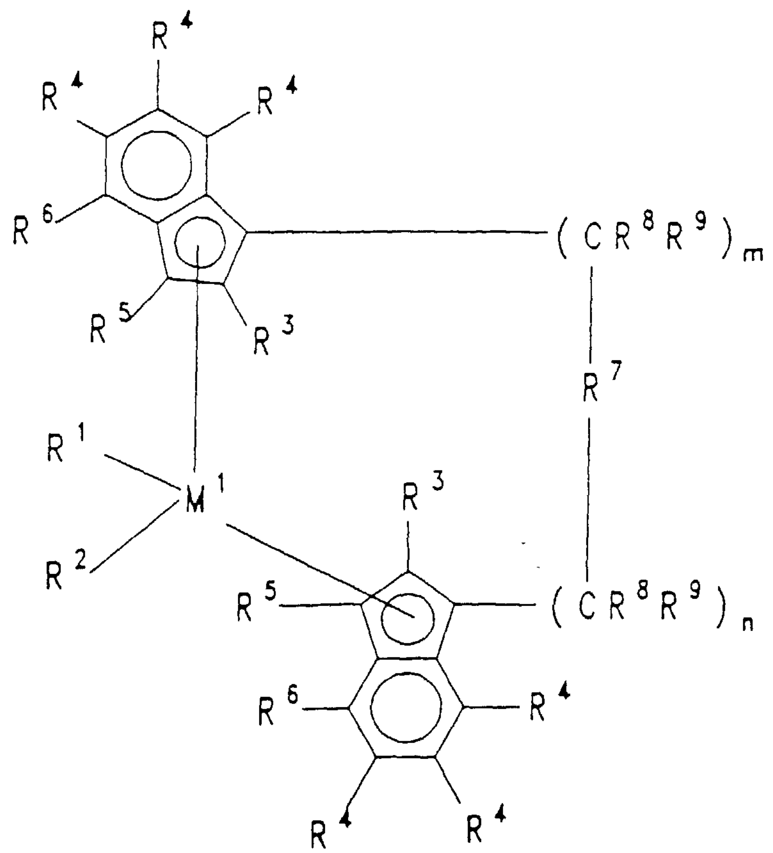

(I)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| die Reste $R^4$ und $R^5$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, die halogeniert sein kann, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^3$ und $R^6$ | gleich oder verschieden sind und die für $R^4$ genannte Bedeutung haben, mit der Maßgabe, daß $R^3$ und $R^6$ nicht Wasserstoff sind, |

oder zwei oder mehr der Reste $R^3$ bis $R^6$ zusammen mit den sie verbindenden Atomen ein Ringsystem bilden,

$R^7$

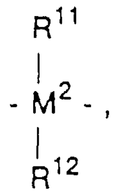 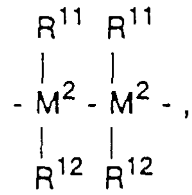 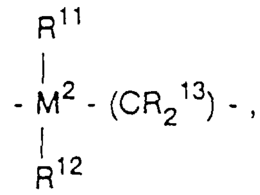 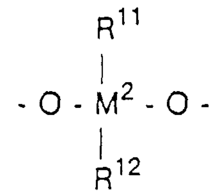

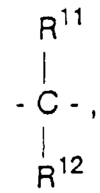 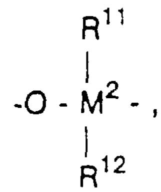

| | |
|---|---|
| | $=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist, wobei |
| | wobei |
| $R^{11}$, $R^{12}$ und $R^{13}$ | gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden, |
| $M^2$ | Silizium, Germanium oder Zinn ist, |
| $R^8$ und $R^9$ | gleich oder verschieden sind und die für $R^{11}$ genannte Bedeutung haben und |
| m und n | gleich oder verschieden sind und null, 1 oder 2 sind, wobei m plus n null, 1 oder 2 ist. |

**2.** Verfahren gemäß Anspruch 1, dadurch gekennzeichnet, daß in Formel I $M^1$ Zr oder Hf, $R^1$ und $R^2$ gleich oder verschieden sind und Methyl oder Chlor, $R^3$ und $R^6$ gleich oder verschieden sind und Methyl, Isopropyl, Phenyl, Ethyl oder Trifluormethyl, $R^4$ und $R^5$ Wasserstoff und die für $R^3$ und $R^6$ genannte Bedeutung haben oder $R^4$ mit $R^6$ einen aliphatischen oder aromatischen Ring bildet, oder benachbarte Reste $R^4$ einen soichen Ring bilden, und $R^7$ einen Rest

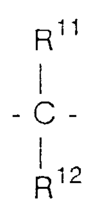 oder 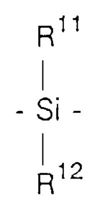

und m plus n null oder 1 bedeuten.

**3.** Verfahren gemäß Anspruch 1 oder 2, dadurch gekennzeichnet, daß als Metallocen der Formel I die rac:meso > 1:99-Form oder die reine meso-Form der Verbindungen $Me_2Si$(2,4-dimethyl-1-indenyl)$_2ZrCl_2$, $Me_2Si$(2-methyl-4-isopropyl-1-indenyl)$_2ZrCl_2$, $Me_2Si$(2-ethyl-4-methyl-1-indenyl)$_2ZrCl_2$, Ph(Me)Si(2-methyl-4-isopropyl-1-indenyl)$_2ZrCl_2$, $Me_2Si$(2-methyl-4,5-benzoindenyl)$_2ZrCl_2$, $Me_2Si$(2,4,6-trimethyl-1-indenyl)$_2ZrCl_2$, $Me_2Si$(2-methyl-4,6-diisopropyl-1-indenyl)$_2ZrCl_2$, $Me_2Si$(2-methyl-α-acenaphthindenyl)$_2ZrCl_2$, $Me_2Si$(2-methyl-4-phenyl-1-indenyl)$_2ZrCl_2$, Ethylen(2,4,6-trimethyl-1-indenyl)$_2ZrCl_2$, Ethylen(2-methyl-4,5-benzoindenyl)$_2ZrCl_2$, Methylethylen (2-methyl-α-acenaphthindenyl)$_2ZrCl_2$ oder Ph(Me)Si(2-methyl-α-acenaphthindenyl)$_2ZrCl_2$ verwendet werden.

**4.** Verfahren gemäß einem oder mehreren der Ansprüche 1 bis 3, dadurch gekennzeichnet, daß als Cokatalysator

ein Aluminoxan der Formel (II)

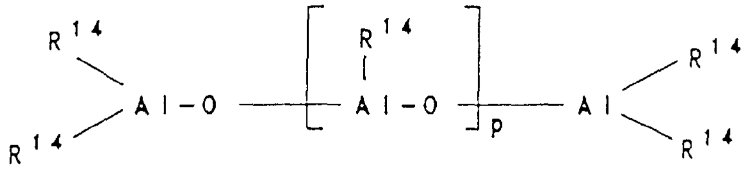

(II)

für den linearen Typ und/oder der Formel (III)

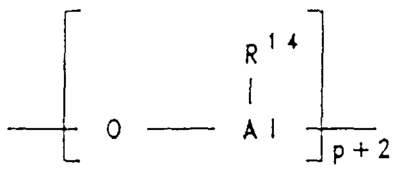

(III)

für den cyclischen Typ verwendet wird,
wobei in den Formeln (II) und (III) die Reste $R^{14}$ gleich oder verschieden sind und eine $C_1$-$C_6$-Alkylgruppe, eine $C_6$-$C_{18}$-Arylgruppe, Benzyl oder Wasserstoff bedeuten und p eine ganze Zahl von 2 bis 50 ist.

**5.** Verfahren gemäß einem oder mehreren der Ansprüche 1 bis 4, dadurch gekennzeichnet, daß als Cokatalysator Methylaluminoxan verwendet wird.

**6.** Verfahren gemäß Anspruch 4 oder 5, dadurch gekennzeichnet, daß das Metallocen der Formel vor dem Einsatz in der Polymerisationsreaktion mit einem Aluminoxan der Formel II und/oder III voraktiviert wird.

**7.** Verfahren gemäß der Ansprüche 1 bis 6, dadurch gekennzeichnet, daß mit einer meso:rac > 1:99-Mischung des Metallocens der Formel I ein Polyolefin hergestellt wird, das aus mindestens zwei Arten von Polyolefinketten besteht:

a) maximal 99 Gew.-% der Polymerketten bestehen aus isotaktisch verknüpften α-Olefineinheiten mit einem Isotaxieindex > 90 % und einer Polydispersität von ≤ 4,0, und
b) mindestens 1 Gew.-% der Polymerketten bestehen aus ataktischen Polyolefinen mit einem Isotaxieindex ≤ 60 %, einer Viskositätszahl VZ > 80 $cm^3$/g, einer Molmasse $M_w$ > 100 000 g/mol, und einer Polydispersität $M_w/M_n \leq 4,0$.

**8.** Olefinpolymer, herstellbar nach dem Verfahren gemäß einem oder mehrerer der Ansprüche 1 bis 7.

**9.** Olefinpolymer gemäß Anspruch 8, dadurch gekennzeichnet, daß das Polymer aus mindestens zwei Arten von Polyolefinketten besteht:

a) maximal 99 Gew.-% der Polymerketten bestehen aus isotaktisch verknüpften α-Olefineinheiten mit einem Isotaxieindex > 90 % und einer Polydispersität von ≤ 4,0, und
b) mindestens 1 Gew.-% der Polymerketten bestehen aus ataktischen Polyolefinen mit einem Isotaxieindex ≤ 60 %, einer Viskositätszahl VZ > 80 $cm^3$/g, einer Molmasse $M_w$ > 100 000 g/mol, und einer Polydispersität $M_w/M_n \leq 4,0$.

## Claims

**1.** A process for the preparation of an olefin polymer having a viscosity index VI of > 80 $cm^3$/g, a molecular weight $M_w$ of > 100,000 g/mol, a polydispersity $M_w/M_n$ of ≤ 4.0 and an isotactic index of ≤ 60% by polymerization or copolymerization of an olefin of the formula $R^a$-CH=CH-$R^b$, in which $R^a$ and $R^b$ are identical or different and are a hydrogen atom or a hydrocarbon radical having 1 to 14 carbon atoms, or $R^a$ and $R^b$, together with the atoms

connecting them, can form a ring, at a temperature of from -60 to 200°C, at a pressure of from 0.5 to 100 bar, in solution, in suspension or in the gas phase, in the presence of a catalyst formed from a metallocene in the meso-form or a meso:rac mixture, with meso:rac > 1:99, as transition-metal compound and a cocatalyst, wherein the metallocene is a compound of the formula I

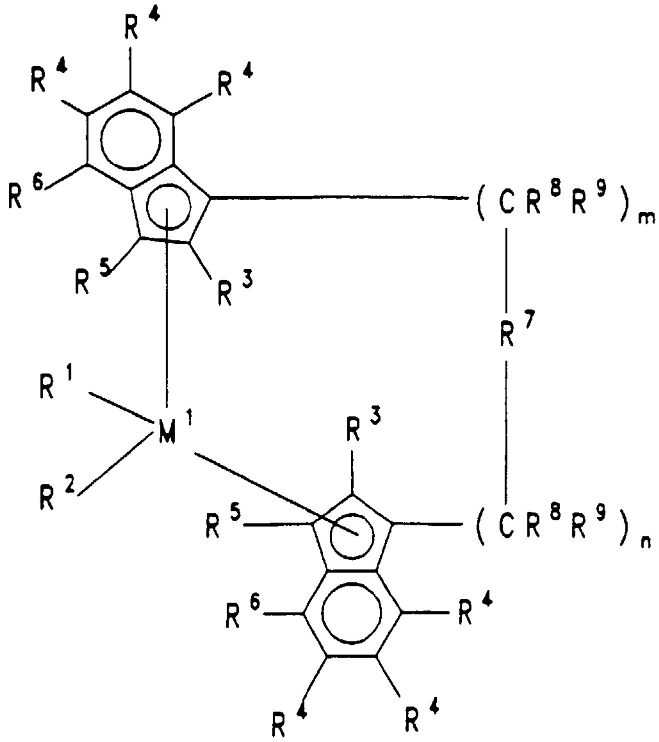

(I)

in which

$M^1$ is a metal from group IVb, Vb or VIb of the Periodic Table,
$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,
the radicals $R^4$ and $R^5$ are identical or different and are a hydrogen atom, a halogen atom, a $C_1$-$C_{10}$-alkyl group, which may be halogenated, a $C_6$-$C_{10}$-aryl group, which may be halogented, an $-NR^{10}_2$, $-SR^{10}$, $-QSiR^{10}_3$, $-SiR^{10}_3$ or $-PR^{10}_2$ radical in which $R^{10}$ is a halogen atom, a $C_1$-$C_{10}$-alkyl group or a $C_6$-$C_{10}$-aryl group,
$R^3$ and $R^6$ are identical or different and are as defined for $R^4$, with the proviso that $R^3$ and $R^6$ are not hydrogen, or two or more of the radicals $R^3$ to $R^6$, together with the atoms connecting them, form a ring system,

$R^7$ is 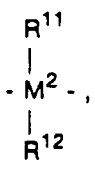 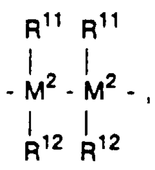 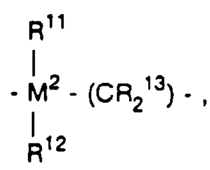 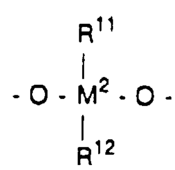

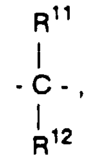, 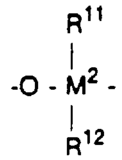,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$,
where
$R^{11}$, $R^{12}$ and $R^{13}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, in each case together with the atoms connecting them, form a ring,
$M^2$ is silicon, germanium or tin,
$R^8$ and $R^9$ are identical or different and are as defined for $R^{11}$, and
m and n are identical or different and are zero, 1 or 2, where m plus n is zero, 1 or 2.

**2.** The process as claimed in claim 1, wherein, in formula I, $M^1$ is Zr or Hf, $R^1$ and $R^2$ are identical or different and are methyl or chlorine, $R^3$ and $R^6$ are identical or different and are methyl, isopropyl, phenyl, ethyl or trifluoromethyl, $R^4$ and $R^5$ are hydrogen or as defined for $R^3$ and $R^6$, or $R^4$ forms an aliphatic or aromatic ring with $R^6$, or adjacent radicals $R^4$ form a ring of this type, and $R^7$ is a

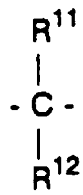 or 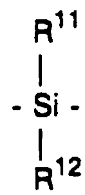

radical, and m plus n is zero or 1.

**3.** The process as claimed in claim 1 or 2, wherein the metallocene of the formula I is the rac:meso > 1:99 form or the pure meso-form of the compounds $Me_2Si$(2,4-dimethyl-1-indenyl)-1-indenyl)$_2ZrCl_2$, $Me_2Si$(2-methyl-4-isopropyl-1-indenyl)$_2ZrCl_2$, $Me_2Si$(2-ethyl-4-methyl-1-indenyl)$_2ZrCl_2$, Ph(Me)Si(2-methyl-4-isopropyl-1-indenyl)$_2ZrCl_2$, $Me_2Si$(2-methyl-4,5-benzoindenyl)$_2ZrCl_2$, $Me_2Si$(2,4,6-trimethyl-1-indenyl)$_2ZrCl_2$, $Me_2Si$(2-methyl-4,6-diisopropyl-1-indenyl)$_2ZrCl_2$, $Me_2Si$(2-methyl-$\alpha$-acenaphthindenyl)$_2ZrCl_2$, $Me_2Si$(2-methyl-4-phenyl-1-indenyl)$_2ZrCl_2$, ethylene(2,4,6-trimethyl-1-indenyl)$_2ZrCl_2$, ethylene(2-methyl-4,5-benzo-indenyl)$_2ZrCl_2$, methylethylene(2-methyl-$\alpha$-acenaphthindenyl)$_2ZrCl_2$ or Ph(Me)Si(2-methyl-$\alpha$-acenaphthindenyl)$_2ZrCl_2$.

**4.** The process as claimed in one or more of claims 1 to 3, wherein the cocatalyst used is an aluminoxane of the formula (II)

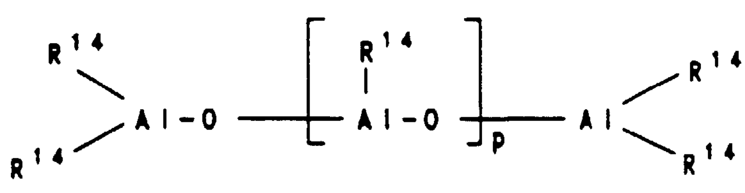 (II)

for the linear type and/or of the formula (III)

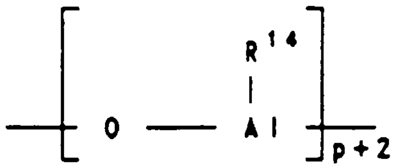

(III)

for the cyclic type,
where, in the formulae (II) and (III), the radicals $R^{14}$ are identical or different and are a $C_1$-$C_6$-alkyl group, a $C_6$-$C_{18}$-aryl group, benzyl or hydrogen, and p is an integer from 2 to 50.

**5.** The process as claimed in one or more of claims 1 to 4, wherein the cocatalyst used is methylaluminoxane.

**6.** The process as claimed in claim 4 or 5, wherein the metallocene of the formula I is preactivated by means of an aluminoxane of the formula II and/or III before use in the polymerizaticn reaction.

**7.** The process as claimed in any of claims 1 to 6, wherein a meso:rac > 1:99 mixture of the metallocene of the formula I is used to prepare a polyolefin which comprises at least two types of polyolefin chains:

a) a maximum of 99% by weight of the polymer chains comprise isotactically linked $\alpha$-olefin units having an isotactic index of > 90% and a polydispersity of ≤ 4.0, and
b) at least 1% by weight of the polymer chains comprise atactic polyolefins having an isotactic index of ≤ 60%, a viscosity index VI of > 80 $cm^3$/g, a molecular weight $M_w$ of > 100,000 g/mol and a polydispersity $M_w/M_n$ of ≤ 4.0.

**8.** An olefin polymer which can be prepared by the process as claimed in one or more of claims 1 to 7.

**9.** An olefin polymer as claimed in claim 8, wherein the polymer comprises at least two types of polyolefin chains:

a) a maximum of 99% by weight of the polymer chains comprise isotactically linked $\alpha$-olefin units having an isotactic index of > 90% and a polydispersity of ≤ 4.0, and
b) at least 1% by weight of the polymer chains comprise atactic polyolefins having an isotactic index of ≤ 60%, a viscosity index VI of > 80 $cm^3$/g, a molecular weight $M_w$ of > 100,000 g/mol and a polydispersity $M_w/M_n$ of ≤ 4.0.

## Revendications

**1.** Procédé de préparation d'un polymère oléfinique présentant un indice de viscosité I.V. > 80 $cm^3$/g, une masse molaire $M_w$ > 100.000 g/mole, une polydispersité $M_w/M_n$ ≤ 4,0 et un indice d'isotacticité ≤ 60%, par polymérisation ou copolymérisation d'une oléfine de la formule $R^a$-CH=CH-$R^b$, où $R^a$ et $R^b$ sont identiques ou différents et représentent un atome d'hydrogène ou un radical d'hydrocarbure comportant 1 à 14 atomes de C, $R^a$ et $R^b$ pouvant former un noyau avec les atomes qui les relient, à une température de -60 à 200°C, pour une pression de 0,5 à 100 bars, en solution, en suspension ou dans la phase gazeuse, en présence d'un catalyseur qui est formé d'un métallocène sous la forme méso ou d'un mélange méso/rac, avec méso/rac > 1/99, comme composé métallique de transition, et d'un cocatalyseur, caractérisé en ce que le métallocène est un composé de la formule I

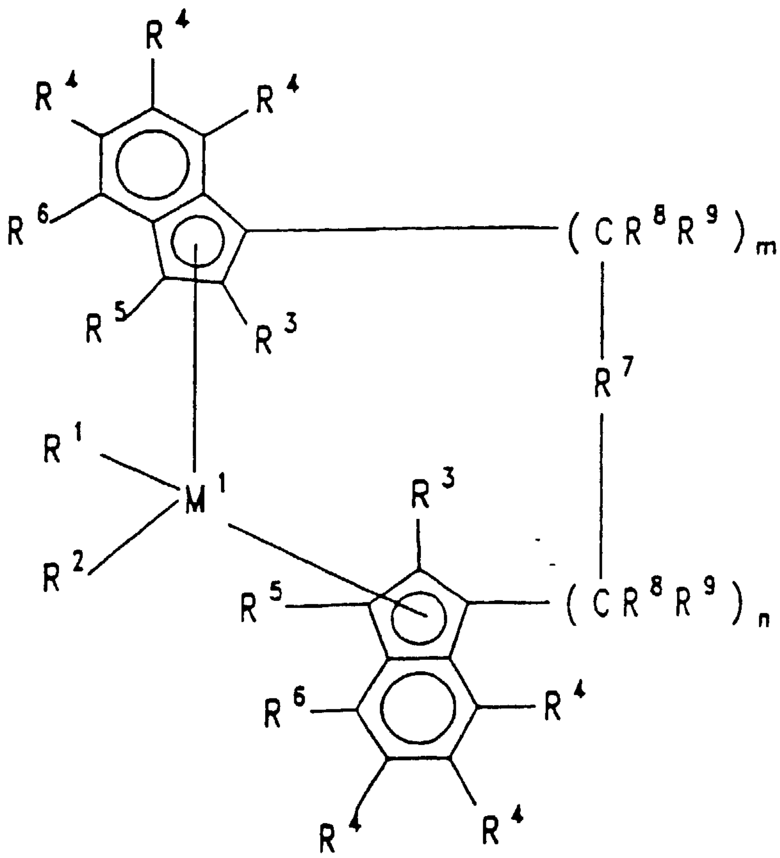

(I)

dans laquelle

$M^1$ représente un métal du groupe IVb, Vb ou VIb du système périodique,

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

les radicaux $R^4$ et $R^5$ sont identiques ou différents et représentent un atome d'hydrogène, un atome d'halogène, un groupe alkyle en $C_1$-$C_{10}$, qui peut être halogéné, un groupe aryle en $C_6$-$C_{10}$, qui peut être halogéné, un radical $-NR_2^{10}$, $-SR^{10}$, $-OSiR_3^{10}$, $-SiR_3^{10}$ ou $-PR_2^{10}$, où $R^{10}$ représente un atome d'halogène, un groupe alkyle en $C_1$-$C_{10}$ ou un groupe aryle en $C_6$-$C_{10}$,

$R^3$ et $R^6$ sont identiques ou différents et ont la signification donnée pour $R^4$, à la condition que $R^3$ et $R^6$ ne sont pas de l'hydrogène,

deux ou plusieurs des radicaux $R^3$ à $R^6$ pouvant former conjointement avec les atomes qui les relient un système de noyau,

$R^7$ est

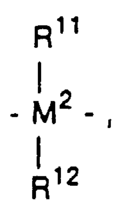 , 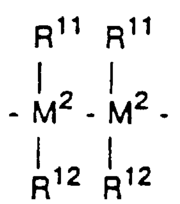 , 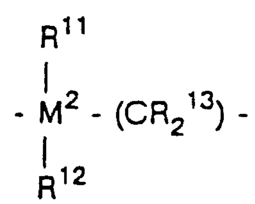 , 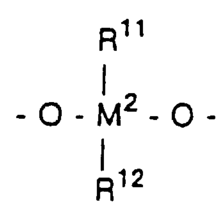

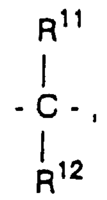

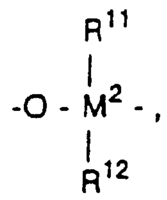

$= BR^{11}$, $= AlR^{11}$, -Ge-, -Sn-, -O-, -S-, =SO, $=SO_2$, $= NR^{11}$, =CO, $=PR^{11}$ ou $=P(O)R^{11}$,
où
$R^{11}$, $R^{12}$ et $R^{13}$ sont identiques ou différents et représentent un atome d'hydrogène, un atome d'halogène, un groupe alkyle en $C_1$-$C_{10}$, un groupe fluoroalkyle en $C_1$-$C_{10}$, un groupe aryle en $C_6$-$C_{10}$, un groupe fluoroaryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, groupe alkylaryle en $C_7$-$C_{40}$, $R^{11}$ et $R^{12}$ ou $R^{11}$ et $R^{13}$ pouvant chacun former un noyau avec les atomes qui les relient,
$M^2$ représente du silicium, du germanium ou de l'étain,
$R^8$ et $R^9$ sont identiques ou différents et ont la signification donnée pour $R^{11}$, et
m et n sont identiques ou différents et sont égaux à zéro, 1 ou 2, m plus n étant égal à zéro, 1 ou 2.

2. Procédé suivant la revendication 1, caractérisé en ce que, dans la formule I, $M^1$ représente Zr ou Hf, $R^1$ et $R^2$ sont identiques ou différents et représentent du méthyle ou du chlore, $R^3$ et $R^6$ sont identiques ou différents et représentent du méthyle, de l'isopropyle, du phényle, de l'éthyle ou du trifluorométhyle, $R^4$ et $R^5$ représentent de l'hydrogène et ont la signification donnée pour $R^3$ et $R^6$, $R^4$ pouvant former avec $R^6$ un noyau aliphatique ou aromatique, des radicaux $R^4$ voisins pouvant former un tel noyau, et
$R^7$ représente un radical

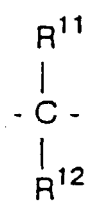

ou

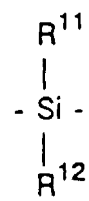

et m plus n est égal à zéro ou à 1.

3. Procédé suivant l'une des revendications 1 et 2, caractérisé en ce que, comme métallocène de la formule I, on utilise la forme rac/méso > 1/99 ou la forme méso pure des composés $Me_2Si$(2,4-diméthyl-1-indényl)$_2ZrCl_2$, $Me_2Si$(2-méthyl-4-isopropyl-1-indényl)$_2ZrCl_2$, $Me_2Si$(2-éthyl-4-méthyl-1-indényl)$_2ZrCl_2$, Ph(Me)Si(2-méthyl-4-isopropyl-1-indényl)$_2ZrCl_2$, $Me_2Si$(2-méthyl-4,5-benzoindényl)$_2ZrCl_2$, $Me_2Si$(2,4,6-triméthyl-1-indényl)$_2ZrCl_2$, $Me_2Si$(2-méthyl-4,6-diisopropyl-1-indényl)$_2ZrCl_2$, $Me_2Si$(2-méthyl-α-acénaphtindényl)$_2ZrCl_2$, $Me_2Si$(2-méthyl-4-phényl-1-indényl)$_2ZrCl_2$, éthylène(2,4,6-triméthyl-1-indényl)$_2ZrCl_2$, éthylène(2-méthyl-4,5-benzoindényl)$_2ZrCl_2$, méthyléthylène(2-méthyl-α-acénaphtindényl)$_2ZrCl_2$ ou Ph(Me)Si(2-méthyl-α-acénaphtindényl)$_2ZrCl_2$.

4. Procédé suivant une ou plusieurs des revendications 1 à 3, caractérisé en ce que, comme cocatalyseur, on utilise un aluminoxane de la formule (II)

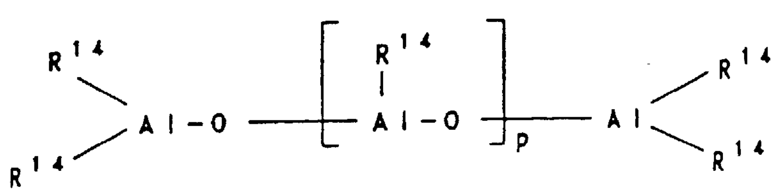

(II)

pour le type linéaire et/ou de la formule (III)

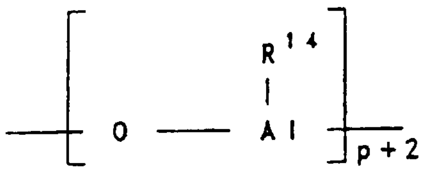

(III)

pour le type cyclique,
formules II et III dans lesquelles les radicaux $R^{14}$ sont identiques ou différents et représentent un groupe alkyle en $C_1$-$C_6$, un groupe aryle en $C_6$-$C_{18}$, du benzyle ou de l'hydrogène, et p est un nombre entier de 2 à 50.

**5.** Procédé suivant une ou plusieurs des revendications 1 à 4, caractérisé en ce qu'on utilise, comme cocatalyseur, du méthyl-aluminoxane.

**6.** Procédé suivant l'une des revendications 4 et 5, caractérisé en ce que le métallocène de la formule I est préalablement activé avec un aluminoxane de la formule II et/ou III, avant la mise en oeuvre dans la réaction de polymérisation.

**7.** Procédé suivant l'une des revendications 1 à 6, caractérisé en ce qu'avec un mélange méso/rac > 1/99 du métallocène de la formule I, on prépare une polyoléfine qui est constituée d'au moins deux types de chaîne polyoléfinique :

a) au maximum 99 % en poids des chaînes polymères sont constituées d'unités α-oléfiniques enchaînées de manière isotactique avec un indice d'isotacticité > 90 % et une polydispersité de ≤ 4,0, et
b) au moins 1% en poids des chaînes polymères est constitué de polyoléfines atactiques ayant un indice d'isotacticité ≤ 60%, un indice de viscosité I.V. > 80$cm^3$/g, une masse molaire $M_w$ > 100.000 g/mole et une polydispersité de $M_w/M_n \leq 4{,}0$.

**8.** Polymère oléfinique, préparable selon le procédé suivant une ou plusieurs des revendications 1 à 7.

**9.** Polymère oléfinique suivant la revendication 8, caractérisé en ce que le polymère est constitué d'au moins deux types de chaînes polyoléfiniques :

a) au maximum 99 % en poids des chaînes polymères sont constituées d'unités α-oléfiniques enchaînées de manière isotactique et présentant un indice d'isotacticité > 90 % et une polydispersité ≤ 4,0, et
b) au moins 1% en poids des chaînes polymères est constitué de polyoléfines atactiques ayant un indice d'isotacticité ≤ 60%, un indice de viscosité I-V- > 80$cm^3$/g, une masse molaire $M_w$ > 100.000 g/mole et une polydispersité de $M_w/M_n \leq 4{,}0$.